(19) Europäisches Patentamt
European Patent Office
Office européen des brevets

(11) **EP 4 493 996 B1**

(12) **EUROPEAN PATENT SPECIFICATION**

(45) Date of publication and mention
of the grant of the patent:
**17.06.2026  Bulletin 2026/25**

(21) Application number: **23712178.5**

(22) Date of filing: **14.03.2023**

(51) International Patent Classification (IPC):
**G06F 7/58** (2006.01)

(52) Cooperative Patent Classification (CPC):
**G06F 7/588**

(86) International application number:
**PCT/EP2023/056398**

(87) International publication number:
**WO 2023/174898 (21.09.2023 Gazette 2023/38)**

(54) **DEVICE FOR QUANTUM RANDOM NUMBER GENERATION AND METHOD FOR VERIFICATION OF PRIVACY OF RANDOM NUMBER SEQUENCES GENERATED BY MEANS THEREOF**

VORRICHTUNG ZUR QUANTENZUFALLSZAHLENERZEUGUNG UND VERFAHREN ZUR VERIFIZIERUNG DER PRIVATSPHÄRE VON DAMIT ERZEUGTEN ZUFALLSZAHLENSEQUENZEN

DISPOSITIF DE GÉNÉRATION QUANTIQUE DE NOMBRES ALÉATOIRES ET PROCÉDÉ DE VÉRIFICATION DE LA CONFIDENTIALITÉ DE SÉQUENCES DE NOMBRES ALÉATOIRES GÉNÉRÉES AU MOYEN DU DISPOSITIF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.03.2022  PL 44069522**

(43) Date of publication of application:
**22.01.2025  Bulletin 2025/04**

(73) Proprietors:
• **Uniwersytet Warszawski**
**00-927 Warszawa (PL)**
• **Uniwersytet Gdanski**
**80-309 Gdansk (PL)**

(72) Inventors:
• **PAWLOWSKI, Marcin**
**81-461 Gdynia (PL)**
• **JACHURA, Michal**
**02-353 Warszawa (PL)**
• **JARZYNA, Marcin**
**01-107 Warszawa (PL)**

• **LUKANOWSKI, Karol**
**01-771 Warszawa (PL)**
• **BANASZEK, Konrad**
**02-606 Warszawa (PL)**

(74) Representative: **JD&P Patent Attorneys**
**Joanna Dargiewicz & Partners**
**ul. Mysliborska 93A/50**
**03-185 Warszawa (PL)**

(56) References cited:
**EP-A1- 3 040 853**

• NICOL\'O LEONE ET AL: "Certified quantum random number generator based on single-photon entanglement", ARXIV.ORG, CORNELL UNIVERSITY LIBRARY, 201 OLIN LIBRARY CORNELL UNIVERSITY ITHACA, NY 14853, 7 May 2021 (2021-05-07), XP081955301
• MA XIONGFENG ET AL: "Quantum random number generation", 10 May 2016 (2016-05-10), XP055508375, Retrieved from the Internet <URL:https://arxiv.org/pdf/1510.08957.pdf> [retrieved on 20180920]

**Description**

**[Technical field]**

The invention relates to a light polarization-based device for quantum random number generation and a method for verification of privacy of random number sequences generated by means of the device for quantum random number generation. The generation of random number sequences is done by measuring coherent quantum states or Fock quantum states by means of a pair of single photon detectors. Recording the measurement results allows to obtain a true random bit sequence, which, if needed, can be converted to a set of true random numbers in decimal notation. The verification of privacy is carried out by means of a multi-state polarization modulator or a pair of two-state polarization modulators being a part of the generator that modify the measured quantum state.

**[Background art]**

The generation of random numbers is widely used in such fields of technology as classical and quantum cryptography, computer numerical simulations (Monte Carlo method), as well as is the basis for the operation of online casinos and lotteries. Depending on the principle of operation, the random number generators are divided into the pseudorandom number generators, in which a computer algorithm, based on a short set of random numbers, the so-called seed, in a deterministic way generates a sequence of numbers with properties close to random, and the true random number generators, in which random numbers are generated based on an inherently random physical phenomenon (e.g. radioactive decay [K. Park, S. Park, B. G. Choi, T. Kang, J. Kim, Y.-H. Kim, H.-Z. Jin, "A lightweight true random number generator using beta radiation for IoT applications", ETRI Journal. 42(6), 951-964 (2020)] or electromagnetic atmospheric noise [https://www.random.org/]). The pseudorandom generators have a number of disadvantages related to the cyclical nature of the generated numbers and inhomogeneity of their distribution. In addition, if the seed is intercepted by an unauthorized person, he or she can generate the same sequence of numbers without the generator user's knowledge, posing a serious threat to the privacy of the sequence.

Due to the probabilistic nature of measurement in quantum mechanics, the use of quantum phenomena to generate true random numbers has become a natural direction for the development of fast, cheap and miniaturized generators. The work [X. Ma, X. Yuan, Z. Cao, B. Qi, Z. Zhang "Quantum random number generation" npj Quantum Information 2, 16021 (2016)] presents a review of the most important experiments carried out over the last 20 years, in which quantum optics phenomena such as the measurement of amplified spontaneous emission, the measurement of quantum vacuum fluctuations and the measurement of the quantum state of a single photon, are used to generate true random numbers. The perfect randomness of quantum random number generators and the privacy of the sequence generated by them stem from simplified theoretical models which assume an idealized scenario where the user has full knowledge about the structure of the device, the optical components have parameters that do not change over time, and there are no measurement errors during the measurement, etc. However, the operation of realistic generators always shows some deviations from the theoretical model, resulting, i.a., from temperature fluctuations, wear of optical and electronic components, as well as, in the worst scenario, an intentional interference by the manufacturer or other unauthorized party in the device. In order to distinguish whether the device generates a predefined sequence of random numbers known to the manufacturer or another unauthorized party, or whether it is a private sequence generated in real time (i.e. one that cannot be guessed or reconstructed by an unauthorized party), it is necessary to develop a procedure for testing (certification) of such a device. The testing procedure is indispensable especially when the device is purchased from an external company, so that the user does not have full knowledge about its structure and must treat it as untrusted.

Quantum random number generators that test the privacy and randomness of the generated sequence during their operation (self-testing generators) are the safest class of devices with the widest application possibilities. This most secure class of devices is referred to as device independent class of quantum random number generators. One of the first implementations of such a device was described in the paper [A. Kulikov, M. Jerger, A. Potočki, A. Wallraff, A. Fedorov "Realization of Quantum Random Generator Certified with the Kochen-Specker Theorem" Phys. Rev. Lett. 119, 240501 (2017)], where testing is carried out using the Kochen-Specker theorem, and the achieved rate of random bit generation reaches 25 kbit/s.

The paper [D. Drahi et al. "Certified Quantum Random Numbers from Untrusted Light" Phys. Rev. X 10, 041048 (2020)] describes a record-breaking fast (8.05 Gbit/s), partially self-testing random number generator based on optical homodyne measurement of vacuum fluctuations. This generator consists of a continuous-wave laser, an optical attenuator with adjustable attenuation, beam splitters, fast photodiodes and control electronics. Part of the optical beam in the generator is used to test the incoming coherent state produced by the laser so that the generator can use an untrusted light source. The measurement system in the generator is not tested, therefore its implementation requires the use of trusted photodetectors. Thus, it is a partially self-testing generator belonging to the security class called the source device independent class.

US20190393675A1 describes a random number generator, in which an optical homodyne measurement is performed on an external light beam supplied independently to the device by the user. The phase of the local oscillator in the homodyne measurement can be fixed or random. This enables the measurement of different quadratures of an external light beam being, for example, in a squeezed state, a coherent state, or in a vacuum state. By measuring the external state of light, this solution allows for testing the measuring system in the generator. The trusted light source, indispensable for the generator operation, must be, however, independently purchased and tested, or independently built by the user. Therefore, it is a partially self-testing generator belonging to a security class called the measurement device independent class.

WO2018065593A1 presents a quantum random number generator based on a direct measurement of two non-orthogonal states of light in the pair of temporal modes, i.e. $|0\rangle_{t1}|\alpha\rangle_{t2}$ and $|\alpha\rangle_{t1}|0\rangle_{t2}$. The measurement is performed using a single photon detector with time resolution capability. The inner product of two non-orthogonal states given by the function $e^{-|\alpha|^2}$, can be modified in the generator by changing the amplitude of coherent states. This allows for testing the states of light from which random numbers are generated. The detector capable of measuring single photons with time resolution must be trusted. Thus, it is a partially self-testing generator belonging to the security class called the source independent class.

WO2021215941A1 presents a self-testing random number generator based on multi-port beam splitters, phase modulators and a set of single photon detectors. One set of phase modulators is used to modify the state leaving the light source, whereas the other set of phase modulators is used to modify the state entering a multi-port beam splitter-based detection system. Thanks to such generator architecture, it is possible to independently test both the states of light, which are used for the generation of randomness, and the detector system. This arrangement is very difficult to implement in practice due to the need to maintain the phase stability between multiple beams of light interfering with each other inside a multi-port beam splitter. Additional problems arise from the use of optical phase modulators, which require precise calibration of the operating point and controlled environmental conditions such as temperature for stable operation.

Single photon detectors based on superconductivity are known in the art [Eric A. Dauler et al., Review of superconducting nanowire single-photon detector system design options and demonstrated performance, Optical Engineering 53(8), 081907 (2014)]. Such detectors are characterized by an extremely low number of dark counts and a very high quantum efficiency allowing for effective detection of photons.

[Problem from the background art]

A problem of the prior art is the design and construction of a quantum generator of true random numbers, in which the randomness is generated on the basis of an inherently probabilistic physical phenomenon, and the generated sequence of random numbers will not be known with absolute certainty to an unauthorized party, including the generator manufacturer, i.e. the generator guarantees the privacy of the sequence. A separate problem of the prior art is the implementation of such a generator using the simplest possible optical system consisting of commonly available and cheap optical and optoelectronic components.

[Glossary and definitions of terms known in the art and used in this specification]

As used herein, the following terms have the following meanings, as described in the definitions below:
The term "random bits" means bits generated by the device forming a true random sequence of output bits.
The term "private bit" means a bit generated by the device that cannot be guessed or reconstructed by an unauthorized party, including the manufacturer of the generator.
The term "control bits" means bits of the digital signal applied to the electrical input of the polarization modulator(s).
The term "single photon detector" refers to a device that allows for detection of light with energy corresponding to the energy of a single optical photon. Examples of such detectors include, i.a., avalanche photodiodes, SPD (single photon detectors) and superconducting nanowire detectors of single photons.
The term "polarization separating element" indicated in the Figures of the drawing by 110, means an optical element, wherein the vertical polarization of the optical beam is transmitted, and the horizontal polarization of the optical beam is reflected. Examples of such an element are polarizing beam splitting (PBS) cubes with dielectric coating and birefringence-based polarizers (e.g. Wollaston prism, Nicol prism, Glan-Taylor prism, Glan-Thompson prism).
The term "self-testing generator" means a quantum random number generator that tests the privacy of the generated sequence during its operation.
The term "clicking" means, in the context of a single photon detector, the generation of an electrical/electronic pulse in response to a recorded photon or the spontaneous generation of an electrical/electronic pulse associated with a dark count.
The term "generating module" means an electronic circuit that generates a bit 0 when the detector 131 records a count and a bit 1 when the detector 132 generates a count. The module 140 is capable of generating a random sequence of bits in the digital output 143. Such a module may be based on commonly available microcontrollers or field-programmable gate arrays (FPGA).

The term "vertical polarization" means the direction of linear polarization such that an optical beam with this polarization is transmitted through the polarization separating element.

The term "horizontal polarization" means the direction of linear polarization such that an optical beam with this polarization is reflected by the polarization separating element.

The term "diagonal polarization" means the direction of linear polarization such that an optical beam of this polarization is equally divided by the polarization separating element into two optical beams of equal energies, the reflected beam being horizontally polarized and the transmitted beam being vertically polarized.

The term " privacy of the sequence" means that the bit sequence generated by the device cannot be guessed or reconstructed by an unauthorized party, including the manufacturer of the generator.

The term "unauthorized party" means any person or institution that in an unauthorized manner and without the user's knowledge attempts to obtain information about the generated sequence of random numbers, and thus to undermine the privacy of the sequence. Unauthorized parties may be a potential eavesdropper, device manufacturer, software supplier or other party that is not the user of the device.

The term "control electronics" means an electrical system that generates a digital or analog control signal to control a multi-state polarization modulator or a pair of two-state polarization modulators. Such a system may be based on commonly available microcontrollers or field-programmable gate arrays.

The term "verification of privacy" means checking if the maximum probability of guessing the random bit by an unauthorized party $P_g$ is lower than the maximum acceptable probability value $X$, where $X$ ranges from 50% to 100%. The verification is positive when the inequality $P_g < X$ is satisfied. The verification is negative when the inequality $P_g < X$ is not satisfied. For the unauthorized party's strategy of guessing random bits without any additional information, the maximum probability $P_g$ equals 50%. When the verification is positive, the device is capable of generating random private bits.

The term "extinction coefficient" for the polarization separating element determines the ratio of the energy of the optical beam transmitted by the element to the energy of optical beam reflected by the element, when the beam incident on the element has vertical polarization. For example, for the polarization beam splitting (PBS) cubes the extinction coefficient is 1000:1.

The term "light source" means a coherent light source (e.g. a laser diode) or an incoherent light source (e.g. an LED diode), or a single photon source (for example, based on single atoms or quantum dots). The central wavelength of the light beam used in the device is in the range of 400-1600 nm. The average optical power of the light beam used in the device is less than 1 $\mu$W.

Other terms not defined above, have herein meanings that are given and understood by one skilled in the art in light of the best of his or her knowledge, this disclosure, and the context of the patent.

### [Solution of the problem from the background art]

The invention described in this patent document includes a novel design of the device and an innovative method of self-testing generation of true random numbers based on the laws of quantum mechanics, generated by means of this device. The device according to the invention includes in its structure one multi-state polarization modulator or a pair of two-state polarization modulators providing the user of the device with the ability to verify the privacy of the generated random numbers. Due to the unique design of the device, it allows for detecting possible interference by the device manufacturer and/or an unauthorized party in the process of generating true random numbers.

### [Summary of the invention]

The invention relates to a device for quantum generation of random numbers comprising a light source 100 with fixed polarization and a polarization splitting element 110 optically connected thereto, having a first output 111 corresponding to vertical polarization and a second output 112 corresponding to horizontal polarization, and a first detector 131 optically connected to the first output 111 of the polarization splitting element 110 and a second detector 132 optically connected to the second output 112 of the polarization splitting element 110, a generating module 140 having a first input 141 connected to the output of the first detector 131 and a second input 142 connected to the output of the second detector 132, and a two-state output 143, wherein the generating module 140 is configured to generate on the two-state output 143 bits having a value of 1 upon receiving a signal on the first input 141 and bits having a value of 0 upon receiving a signal on the second input 142, characterized in that the light source 100 is connected to the polarization splitting element 110 via a multi-state polarization modulator 150 controlled by a digital or analog signal generated by a control electronics 160 connected to the multi-state polarization modulator 150. Preferably, the multi-state polarization modulator 150 comprises two two-state polarization modulators 251 and 252 optically connected to each other, wherein both modulators are configured to rotate the polarization by 45° when a control digital signal with the bit value *1* is applied to their electrical input and to rotate the polarization by 0° when a control digital signal with the bit value 0 is applied to their electrical input, or alternatively to rotate the polarization by 45° when a control digital signal with the bit value 0 is applied to their electrical input and to rotate the polarization by 0° when a control digital signal with the bit value *1* is applied to their electrical input.

Preferably, the multi-state polarization modulator 150 comprises two two-state polarization modulators 351 and 352 optically connected to each other, wherein one of the modulators 351, 352 is configured to rotate the polarization by 45° when a digital signal with the bit value *1* is applied to its electrical input and to rotate the polarization by 0° when a digital signal with the bit value 0 is applied to its electrical input, and the second of the modulators 351, 352, respectively, is configured to rotate the polarization by 90° when a digital signal with the bit value *1* is applied to its electrical input, and to rotate the polarization by 0° when a digital signal with a bit value 0 is applied to its electrical input.

Alternatively preferably, the multi-state polarization modulator 150 comprises two two-state polarization modulators 351 and 352 optically connected to each other, one of the modulators 351, 352 being configured to rotate the polarization by 45° when a digital signal with the bit value 0 is applied to its electrical input and to rotate the polarization by 0° when a digital signal with a the bit value *1* is applied to its electrical input, and the second of the modulators, 351, 352, respectively, is configured to rotate the polarization by 90° when a digital signal with the bit value *0* is applied to its electrical input and to rotate the polarization by 0° when a digital signal with the bit value *1* is applied to its electrical input.

Preferably, the polarization separating element 110 is a polarization beam splitting cube with dielectric coating, or a birefringence-based polarizer, or a prism. Preferably, the light source 100 is a coherent light source, preferably comprising a laser diode or a pulsed laser, or an incoherent light source, preferably comprising an LED diode, or a single photon source, preferably based on single atoms or quantum dots. Preferably, the light source 100 is configured to emit vertically or horizontally polarized light pulses.

Preferably, the light source 100 is configured to generate an optical beam with a central wavelength in the range of 400-1600 nm, the average energy of which is less than 1 $\mu$W.

Preferably, the single photon detectors 131 and 132 both comprise an avalanche photodiode or a superconductivity-based single photon detector, or alternatively one of the detectors 131, 132 comprises an avalanche photodiode and the other detector comprises a superconductivity-based single photon detector.

Preferably, the optical path is an optical fiber, a waveguide or an optical beam in free space.

The invention relates also a method for verification of privacy of random bit sequences generated by means of the device according to the invention, in which, while generating random numbers, the polarization of the beam incident on the polarization separating element is diagonal, i.e. rotated by 45° with respect to the direction of polarization transmitted by the polarization separating element, characterized in that during the verification of privacy, using the control electronics 160 one controls the multi-state polarization modulator 150 and rotates the polarization of the light incident on the polarization separating element 110, setting it sequentially at 0°, 45°, and 90° to the direction of polarization transmitted by the polarization separating element, and for each of the three polarization directions (0°, 45°, 90°), the sequences of bits generated by the generating module 140 are recorded, and then, based on each of the three sequences, the probability $P^I$ of recording a count by the first detector 131 and the probability $P^{II}$ of recording a count by the second detector 132 are determined, and based on the six probabilities, i.e. $P^I_{00}, P^{II}_{00}, P^I_{11}, P^{II}_{11}, P^I_{01}, P^{II}_{01}$ or $P^I_{00}, P^{II}_{00}, P^I_{11}, P^{II}_{11}, P^I_{10}, P^{II}_{10}$ or

$P^I_{00}, P^{II}_{00}, P^I_{01}, P^{II}_{01}, P^I_{10}, P^{II}_{10}$ or $P^I_{00}, P^{II}_{00}, P^I_{01}, P^{II}_{01}, P^I_{11}, P^{II}_{11}$ or $P^I_{V_0}, P^{II}_{V_0}, P^I_{V_1}, P^{II}_{V_1}, P^I_{V_2}, P^{II}_{V_2}$,

where

- the Roman numeral *I* or *II* in the superscript means the first detector 131 or the second detector 132, respectively,
- *xy* in the subscript, where *x=0* or *x=1* and *y=0* or *y=1*, mean the values of the control bits applied to the first polarization modulator 251, 351 of the multi-state polarization modulator 150, and to the second polarization modulator 252, 352 of the multi-state polarization modulator 150, respectively,
- $V_0$, $V_1$, and $V_2$ in the subscript mean the voltages $V_0$, $V_1$, and $V_2$, respectively, as applied to the electrical input of the multi-state polarization modulator 150,

the parameters of the physical model of the system are calculated, which are used to determine the maximum probability of guessing a random bit by an unauthorized party $P_g$, and the privacy verification is considered positive when the maximum probability of guessing a random bit by an unauthorized party $P_g$ is lower than the maximum acceptable probability value of guessing a random bit by an unauthorized party unauthorized X. When the verification is positive, the device is capable of generating random private bits.

Preferably, a physical model is used to determine the maximum probability of guessing a random bit by an unauthorized party $P_g$, the parameters of which are:

(a) the average number of photons in the measured pulses - $\mu$;
(b) the transmission coefficient - $\lambda$;
(c) the probability $f$.

Preferably, the verification of privacy of the generated sequence of random bits is considered positive depending on whether the determined parameter values of the physical model ($\mu_0$, $\lambda_0$, $f_0$) belong to a predefined set of numerical values in the three-dimensional space ($\mu$, $\lambda$, $f$) calculated on the basis of a physical model and on the basis of the maximum acceptable value of the probability of guessing a random bit by an unauthorized party $X$.

Preferably, the maximum acceptable value of the probability of guessing a random bit by an unauthorized party $X$ is in the range from 50% to 100%.

Preferably, the maximum acceptable value of the probability of guessing a random bit by an unauthorized party $X$ is 75%, for $X$ = 75% the verification of privacy of the generated sequence of random bits is positive (i.e. $P_g < 75\%$), when the determined parameter values of the physical model ($\mu_0$, $\lambda_0$, $f_0$) are inside tetrahedron whose vertices are in the following points in the three-dimensional space ($\mu$, $\lambda$, $f$):

- ($\mu$=0, $\lambda$=0, $f$=0);
- ($\mu$=0, $\lambda$=0,75, $f$=0);
- ($\mu$=10, $\lambda$=0, $f$=0);
- ($\mu$=0, $\lambda$=0, $f$=1);

The invention relates also to a computer program characterized in that it contains instructions which, when loaded into the control electronics 160 and the generating module 140, implement the above method.

**[Advantages of the invention]**

The invention according to the present patent specification has numerous advantages. It allows for the generation of true random numbers, while ensuring complete confidence that the generated sequence of random numbers is not known to any unauthorized party, including the generator manufacturer. Thanks to the use of the polarization degree of freedom, its technical implementation is much simpler than the previously proposed solutions based on interfering and measuring multiple light beams using an array of single photon detectors.

**[Advantageous embodiments of the invention]**

The invention will now be explained in detail in embodiments, with reference to the accompanying drawing, where in the Figures of the drawing the dotted lines connecting the individual elements of the system indicate optical connections (e.g. optical fiber, waveguide or optical beam in free space), and the solid lines connecting the individual elements of the system indicate electrical connections, in which it is disclosed:

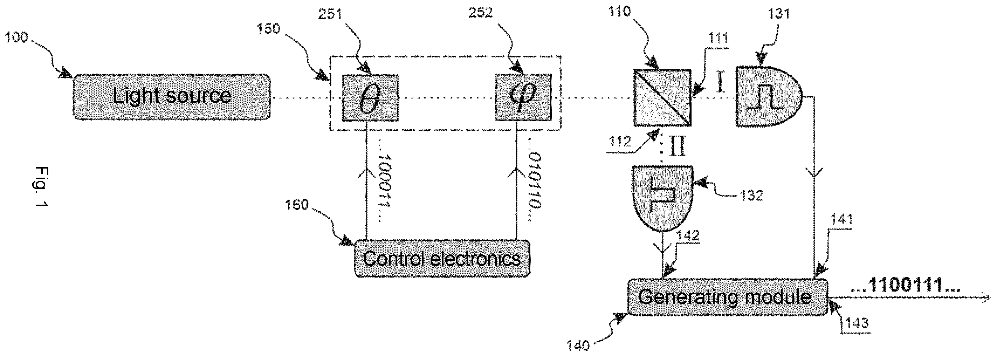

Fig. 1    shows an embodiment of a device for quantum random number generation in which the multi-state modulator 150 is implemented as a pair of two-state polarization modulators 251, 252 controlled by means of the control electronics 160, where the light source 100 generates a coherent optical beam with fixed polarization consistent with or perpendicular to the direction of polarization transmitted by the polarization separating element 110, which is then rotated by the pair of two-state polarization modulators 251, 252. The optical beam is incident on the polarization separating element 110 whose outputs 111, 112 are monitored by two single photon detectors 131, 132, electrically connected 141, 142 to the generating module 140.

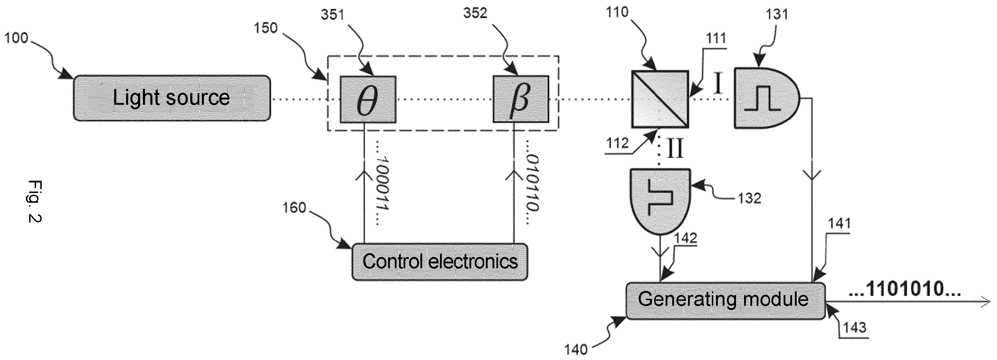

Fig. 2    shows an embodiment of a device for quantum random number generation in which the multi-state modulator 150 is implemented as a pair of two-state polarization modulators 351, 352 controlled by means of the control electronics 160, where the light source 100 generates a coherent optical beam with fixed polarization consistent with or perpendicular to the direction of polarization transmitted by the polarization separating element 110, which is then rotated by the pair of two-state polarization modulators 351, 352. The optical beam is incident on the polarization separating element 110 whose outputs 111, 112 are monitored by two single photon detectors 131, 132, electrically connected 141, 142 to the generating module 140.

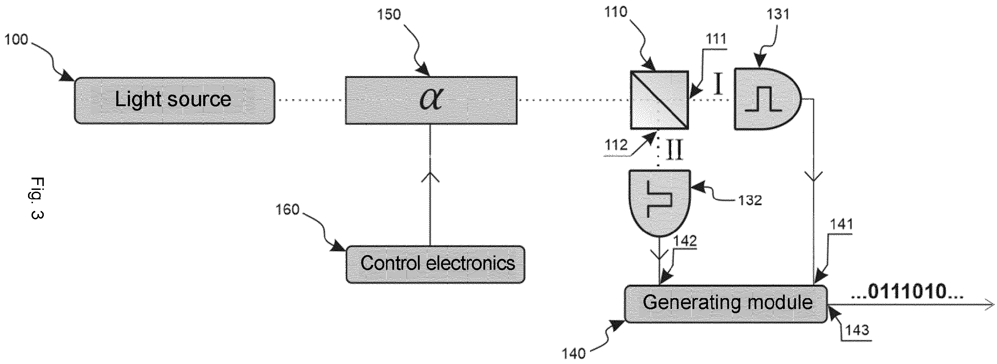

Fig. 3    shows an embodiment of a device for quantum random number generation using the multi-state modulator 150 controlled by means of the control electronics 160, where the light source 100 generates a coherent optical beam with fixed polarization consistent with or perpendicular to the direction of polarization transmitted by the polarization separating element 110, which is then rotated by the multi-state polarization modulator 150. The optical beam is incident on the polarization separating element 110 whose outputs 111, 112 are monitored by two single photon detectors 131, 132, electrically connected 141, 142 to the generating module 140.

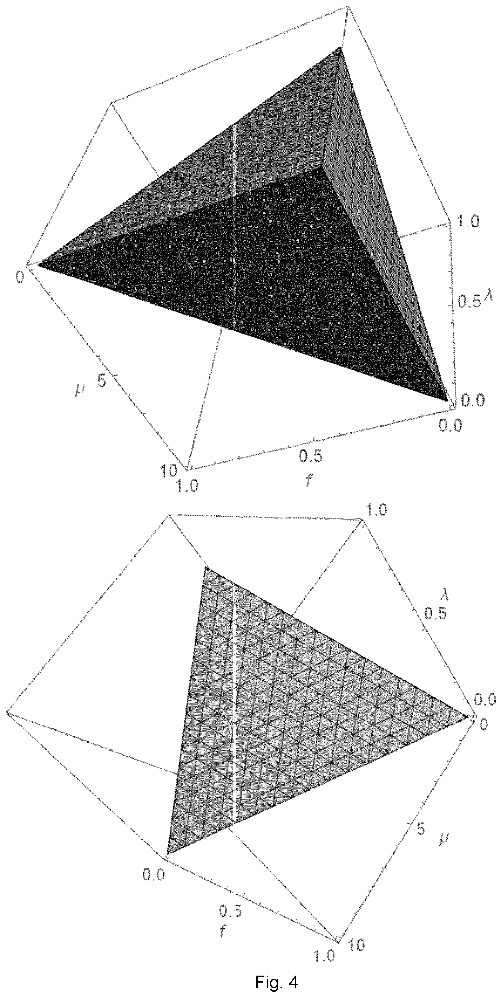

Fig. 4    shows tetrahedron (in two different projections) in a three-dimensional Cartesian coordinate system whose axes ($\mu$, $\lambda$, $f$) represent the parameter values of the physical model, inside the tetrahedron the maximum probability of guessing a random bit by an unauthorized party $P_g$ is lower than 75%, and thus the device allows the generation of private random bits.

The labels used in the Figures of the drawing are consistent with the glossary definitions. Various types of optical and photonic connections are known in the prior art, e.g. optical fiber, waveguide or optical beam in free space, which are indicated by dotted lines in the figures. The solid line in the drawing indicates electrical connections including wire connections and digital signal ports.

**[Embodiments of the invention]**

The following embodiments of the invention are included only for the purpose of illustrating the invention and explaining its particular aspects, not for the purpose of limiting it, and should not be construed as the entire scope thereof, which is defined in the appended claims. In the following examples, unless otherwise indicated, standard materials and methods used in the art are used or manufacturers' recommendations for specific devices, materials and methods are followed.

**EXAMPLE 1**

**Device for quantum random number generation using a pair of two-state polarization modulators and a method for verification of privacy of random number sequences generated by means of the device**

In the embodiment shown in Fig. 1 below, the light source 100 with fixed polarization is a laser diode emitting a coherent optical beam of vertical (alternatively horizontal) polarization. The polarization of the beam is then rotated by a multi-state polarization modulator 150 implemented as a pair of two-state polarization modulators, marked in Fig. 1 as 251, 252. Each of the polarization modulators 251, 252 is independently supplied with a digital control signal from the control electronics 160. For each modulator, when the control bit value 1 is applied to the modulator's electrical input, it rotates the polarization of the optical beam by 45°. On the other hand, when the control bit value 0 is applied to the modulator's electrical input, it rotates the polarization of the optical beam by 0°. The operation of the first modulator 251 is independent of the operation of the second modulator 252. Subsequently, the optical beam is directed to the polarization separating element 110, preferably a polarization beam splitting (PBS) cube, due to its low price and widespread availability, wherein the vertically polarized light is transmitted and the horizontally polarized light is reflected. For the diagonal polarization (rotated by 45°), the polarization beam splitting cube acts as a balanced beam splitting plate, i.e. it splits the incoming beam into two beams of equal energy. Each of the output beams of the polarization beam splitting cube 111, 112 is measured by a single photon detector 131, 132, preferably an avalanche photodiode, or preferably a superconductivity-based single photon detector, which is characterized by an extremely low number of dark counts and a very high quantum efficiency allowing for effective photon detection.

The probability of clicking in each of the detectors can be denoted by $P_{xy}^{I}$ and $P_{xy}^{II}$, where $x$ is the value of the control bit applied to the first polarization modulator 251 and y is the value of the control bit applied to the second polarization modulator 252. The Roman numeral in the superscript denotes the optical path behind the PBS cube, in which the detector is placed in accordance with the labelling in Fig. 1, where the optical path I is marked as 111 and the optical path II as 112. For the combination of control bits {x,y} = {0,1} and {x,y} = {1,0}, the beam incident on the polarization separating element 110 is diagonally polarized, and therefore, according to the rules of quantum optics, the probability of clicking the detector placed in the first optical path 111 is the same as the probability of clicking the detector placed in the second optical path optical 112, i.e. $P_{10}^{I} = P_{10}^{II} = P_{01}^{I} = P_{01}^{II}$. The setting of the polarization modulators {x,y}= {0,1} and {x,y} = {1,0} allows to generate a true random sequence of bits, wherein the bit value 0 corresponds to clicking the detector placed in the optical path I 111, and the bit value 1 corresponds to clicking the detector placed in the optical path II 112. The detector counts are analyzed and converted into a random sequence of bits by the generating module 140.

In order to verify the privacy of the generated random sequence, the probabilities of clicking, $P_{xy}^{I}$ and $P_{xy}^{II}$, are determined on the basis of optical pulse measurements, for three polarization directions of the beam incident on the polarization splitting element (vertical polarization, diagonal polarization and horizontal polarization), i.e. the probabilities $P_{00}^{I}$, $P_{00}^{II}$ (measured with the modulator settings {x,y} = {0,0}), the probabilities $P_{01}^{I}$, $P_{01}^{II}$ or alternatively $P_{10}^{I}$, $P_{10}^{II}$ (measured with the modulator settings {x,y} = {0,1} or alternatively {x,y} = {1,0}, respectively) and the probabilities $P_{11}^{I}$, $P_{11}^{II}$ (measured with the modulator settings {x,y} = {1,1}). During this testing procedure, the device does not allow for random number generation. In an idealized scenario, the probability values for settings {x,y}= {0,0} are $P_{00}^{I} = 1$ and $P_{00}^{II} = 0$, respectively, for settings {x,y} = {1,1}, $P_{11}^{I} = 0$ and $P_{11}^{II} = 1$, respectively, and for settings {x,y} = {1,0} and {x,y} = {0,1}, $P_{10}^{I} = P_{10}^{II} = P_{01}^{I} = P_{01}^{II} = 50\%$, respectively. Due to the dark counts of the detectors, the finite extinction coefficient of the polarization separating element, or a potential interference of an unauthorized party, the measured probabilities will deviate from those of the idealized scenario. Based on the measured values $P_{00}^{I}, P_{00}^{II}, P_{11}^{I}, P_{11}^{II}, P_{01}^{I}, P_{01}^{II}$ or alternatively $P_{00}^{I}, P_{00}^{II}, P_{11}^{I}, P_{11}^{II}, P_{10}^{I}, P_{10}^{II}$ and using the probability theory and the physical model of the optical system, a set of the following parameters of the physical model of the generator system can be calculated:

- $\mu$ - average number of photons in a pulse of laser light measured using the detectors, the measurement of which allows the generation of a random bit;
- $\lambda$ - transmission coefficient, where $\lambda = cos^2(\gamma)$, where $y$ is the angle of polarization rotation of the optical beam incident on the polarization separating element. During the testing procedure, it is assumed that this angle may deviate from the value resulting from the values of the bits controlling the polarization modulators due to an interference of an unauthorized party. In particular, it is assumed that when the settings of the modulators are {x,y} = {1,0} and {x,y} = {0,1}, $\gamma$ may be different than 45°;
- probability f with the setting of the polarization modulators {x,y} = {0,0} means the probability that, due to an interference of an unauthorized party, the detector 131 placed in the optical path I, in spite of having observed a photon, did not send an electric pulse to the generating module, whereas with the setting of the polarization modulators {x,y} = {1,1}, the probability f means the probability that, due to the interference of an unauthorized party, the detector 132 placed in the optical path II, in spite of having observed a photon, did not send an electric pulse to the generating module 140.

Based on the determined values of the above parameters of the physical model ($\mu_0$, $\lambda_0$, $f_0$), the maximum probability of guessing a random bit by an unauthorized party $P_g$ is determined. If the maximum probability $P_g$ satisfies the inequality $P_g < X$, where $X$ is the maximum acceptable probability value of guessing a random bit by an unauthorized party, ranging from 50% to 100%, the device is capable of generating random private bits. Preferably, the maximum probability of guessing a random bit by an unauthorized party $P_g$ should be less than 75%. The condition $P_g < 75\%$ is met when the point ($\mu_0$, $\lambda_0$, $f_0$) in three-dimensional space ($\mu$, $\lambda$, $f$) defined by the determined values of the parameters of the physical model is inside the tetrahedron shown in Fig. 4, whose vertices are in the points:

- ($\mu$=0, $\lambda$=0, f=0);
- ($\mu$=0, $\lambda$=0,75, f=0);
- ($\mu$=10, $\lambda$=0, f=0);
- ($\mu$=0, $\lambda$=0, f=1);

For the unauthorized party's strategy relying on guessing random bits without any additional information, the maximum probability $P_g$ is 50%.

**EXAMPLE 2**

**Alternative device for quantum random number generation using a pair of two-state polarization modulators and a method for verification of privacy of random number sequences generated by means of the device**

In the embodiment shown in Fig. 2 below, the light source 100 with fixed polarization is a laser diode emitting a coherent optical beam of vertical (alternatively horizontal) polarization. The polarization of the beam is then rotated by a multi-state polarization modulator 150 implemented as a pair of two-state polarization modulators, marked in Fig. 1 as 351, 352. Each of the polarization modulators 351, 352 is independently supplied with a digital control signal from the control electronics 160. For the first modulator 351, when the control bit value 0 is applied to the modulator's electrical input, it rotates the polarization of the optical beam by 0°, while when the control bit value *1* is applied to the modulator's electrical input, it rotates the polarization of the optical beam by 45°. For the second modulator 352, when the control bit value *0* is applied to the modulator's electrical input, it rotates the polarization of the optical beam by 0°, while when the control bit value *1* is applied to the modulator's electrical input, it rotates the polarization of the optical beam by 90°. The operation of the first modulator 351 is independent of the operation of the second modulator 352. The order of modulators 351 and 352 in the optical path has no effect on the operation of the device. In this example, the modulator 351 that rotates the beam by 45° is placed in the optical path closer to the light source 100 than the other modulator 352 that rotates the beam by 90°. Subsequently, the optical beam is directed to the polarization separating element 110, preferably a polarization beam splitting (PBS) cube, due to its low price and widespread availability, wherein the vertically polarized light is transmitted and the horizontally polarized light is reflected. For the diagonal polarization (rotated by 45° or 135°), the polarization beam splitting cube acts as a balanced beam splitting plate, i.e. it splits the incoming beam into two beams of equal energy. Each of the output beams of the polarization beam splitting cube 111, 112 is measured by a single photon detector 131, 132, preferably an avalanche photodiode, or preferably a superconductivity-based single photon detector, which is characterized by an extremely low number of dark counts and a very high quantum efficiency allowing for effective photon detection.

The probability of clicking in each of the detectors can be denoted by $P_{xy}^{I}$ and $P_{xy}^{II}$, where *x* is the value of the control bit applied to the first polarization modulator 351 and y is the value of the control bit applied to the second polarization modulator 352. The Roman numeral in the superscript denotes the optical path behind the PBS cube, in which the detector is placed in accordance with the labelling in Fig. 1, where the optical path I is marked as 111 and the optical path II as 112. For the combination of control bits {x,y} = {1,0} or {x,y} = {1,1}, the beam incident on the polarization separating element 110 is diagonally polarized, and therefore, according to the rules of quantum optics, the probability of clicking the detector placed in the first optical path 111 is the same as the probability of clicking the detector placed in the second optical path optical 112, i.e. $P_{10}^{I} = P_{10}^{II} = P_{11}^{I} = P_{11}^{II}$. The setting of the polarization modulators {x,y} = {1,0} or {x,y} = {1,1} allows thus to generate a true random sequence of bits, wherein the bit value *0* corresponds to clicking the detector placed in the optical path I 111, and the bit value *1* corresponds to clicking the detector placed in the optical path II 112. The detector counts are analyzed and converted into a random sequence of bits by the generating module 140.

In order to verify the privacy of the generated random sequence, the probabilities of clicking, $P_{xy}^{I}$ and $P_{xy}^{II}$, are determined on the basis of optical pulse measurements, for three polarization directions of the beam incident on the polarization splitting element (vertical polarization, diagonal polarization and horizontal polarization), i.e. the probabilities $P_{00}^{I}$, $P_{00}^{II}$ (measured with the modulator settings {x,y} = {0,0}), the probabilities $P_{10}^{I}$, $P_{10}^{II}$ or alternatively $P_{11}^{I}$, $P_{11}^{II}$ (measured with the modulator settings {x,y} = {1,0} or alternatively {x,y} = {1,1}, respectively) and the probabilities $P_{01}^{I}$, $P_{01}^{II}$ (measured with the modulator settings {x,y} = {0,1}). During this testing procedure, the device does not allow for random number generation. In an idealized scenario, the probability values for settings {x,y}= {0,0} are $P_{00}^{I} = 1$ and $P_{00}^{II} = 0$, respectively, for settings {x,y} = {0,1}, $P_{01}^{I} = 0$ and $P_{01}^{II} = 1$, respectively, and for settings {x,y} = {1,0} and {x,y} = {1,1}, $P_{10}^{I} = P_{10}^{II} = P_{11}^{I} = P_{11}^{II} = 50\%$, respectively. Due to the dark counts of the detectors, the finite extinction coefficient of the polarization separating element, or a potential interference of an unauthorized party, the measured probabilities will deviate from those of the idealized scenario. Based on the measured values $P_{00}^{I}, P_{00}^{II}, P_{01}^{I}, P_{01}^{II}, P_{10}^{I}, P_{10}^{II}$ or alternatively $P_{00}^{I}, P_{00}^{II}, P_{01}^{I}, P_{01}^{II}, P_{11}^{I}, P_{11}^{II}$ and using the probability theory and the physical model of the optical system, a set of the following parameters of the physical model of the generator system can be calculated:

- $\mu$ - average number of photons in a pulse of laser light measured using the detectors, the measurement of which allows the generation of a random bit;
- $\lambda$ - transmission coefficient, where $\lambda = cos^2(\gamma)$, where $\gamma$ is the angle of polarization rotation of the optical beam incident on the polarization separating element. During the testing procedure, it is assumed that this angle may deviate from the value resulting from the values of the bits controlling the polarization modulators due to an interference of an unauthorized party. In particular, it is assumed that when the settings of the modulators are {x,y} = {1,0} and {x,y} = {1,1}, $\gamma$ may be different than 45° or 135°;
- probability *f* - with the setting of polarization modulators {x,y} = {0,0} means the probability that, due to an interference of an unauthorized party, the detector 131 placed in the optical path I, in spite of having observed a photon, did not send an electric pulse to the generating module, whereas with the setting of polarization modulators $\{x,y\} = \{0,1\}$, the probability $f$ means the probability that, due to the interference of an unauthorized party, the detector 132 placed in the optical path II, in spite of having observed a photon, did not send an electric pulse to the generating module 140.

Based on the determined values of the above parameters of the physical model ($\mu_0$, $\lambda_0$, $f_0$), the maximum probability of guessing a random bit by an unauthorized party $P_g$ is determined. If the maximum probability $P_g$ satisfies the inequality $P_g < X$, where $X$ is the maximum acceptable probability value of guessing a random bit by an unauthorized party, ranging from 50% to 100%, the device is capable of generating random private bits. Preferably, the maximum probability of guessing a random bit by an unauthorized party $P_g$ should be less than 75%. The condition $P_g < 75\%$ is met when the point ($\mu_0$, $\lambda_0$, $f_0$) in three-dimensional space ($\mu$, $\lambda$, $f$) defined by the determined values of the parameters of the physical model is inside the tetrahedron shown in Fig. 4, whose vertices are in the points:

- ($\mu=0$, $\lambda=0$, $f=0$);
- ($\mu=0$, $\lambda=0$, 75, $f=0$);
- ($\mu=10$, $\lambda=0$, $f=0$);
- ($\mu=0$, $\lambda=0$, $f=1$);

For the unauthorized party's strategy relying on guessing random bits without any additional information, the maximum probability $P_g$ is 50%.

**EXAMPLE 3**

**Device for quantum random number generation using a multi-state polarization modulator and a method for verification of privacy of random number sequences generated by means of the device**

In the embodiment shown in Fig. 3 below, the light source 100 with fixed polarization is a laser diode emitting a coherent optical beam of vertical (alternatively horizontal) polarization. The polarization of the beam is then rotated by a single multi-state polarization modulator marked in Fig. 3 as 150. The modulator is supplied with an analog control signal from the control electronics 160. When the voltage $V_0$ is applied to the modulator's electrical input, it rotates the polarization of the optical beam by 0°, when the voltage $V_1$ is applied to the modulator's electrical input, it rotates the polarization of the optical beam by $\gamma = 45°$, when the voltage $V_2$ is applied to the modulator's electrical input, it rotates the polarization of the optical beam by $2\gamma = 90°$. Subsequently, the optical beam is directed to the polarization separating element 110, preferably a polarization beam splitting (PBS) cube, due to its low price and widespread availability, wherein the vertically polarized light is transmitted and the horizontally polarized light is reflected. For the diagonal polarization (rotated by 45°), the polarization beam splitting cube acts as a balanced beam splitting plate, i.e. it splits the incoming beam into two beams of equal energy. Each of the output beams of the polarization beam splitting cube 111, 112 is measured by a single photon detector 131, 132, preferably an avalanche photodiode, or preferably a superconductivity-based single photon detector, which is characterized by an extremely low number of dark counts and a very high quantum efficiency allowing for effective photon detection.

The probability of clicking in each of the detectors can be denoted by $P_v^I$ oraz $P_v^{II}$, where $v$ is the value of the voltage applied to the electrical input of the polarization modulator 150. The Roman numeral in the superscript denotes the optical path behind the PBS cube, in which the detector is placed in accordance with the labelling in Fig. 1, where the optical path I is marked as 111 and the optical path II as 112. For the control voltage $V_1$, the beam incident on the polarization separating element 110 is diagonally polarized, and therefore, according to the rules of quantum optics, the probability of clicking the detector placed in the first optical path 111 is the same as the probability of clicking the detector placed in the second optical path optical 112, i.e. $P_{V_1}^I = P_{V_1}^{II}$. The voltage applied to the electrical input of the polarization modulator $v = V_1$ allows thus to generate a true random sequence of bits, wherein the bit value 0 corresponds to clicking the detector placed in the optical path I 111, and the bit value 1 corresponds to clicking the detector placed in the optical path II 112. The detector counts are analyzed and converted into a random sequence of bits by the generating module 140.

In order to verify the privacy of the generated random sequence, the probabilities of clicking, $P_v^I$ and $P_v^{II}$, are determined on the basis of optical pulse measurements, for three polarization directions of the beam incident on the polarization splitting element (vertical polarization, diagonal polarization and horizontal polarization), i.e. the probabilities $P_{V_0}^I$, $P_{V_0}^{II}$ (measured with the voltage $V_0$ applied to the electrical input of the modulator), the probabilities $P_{V_1}^I$, $P_{V_1}^{II}$ (measured with the voltage $V_1$ applied to the electrical input of the modulator), and the probabilities $P^I_{V_2}$, $P^{II}_{V_2}$ (measured with the voltage $V_2$ applied to the electrical input of the modulator). During this testing procedure, the device does not allow for random number generation. In an idealized scenario, the probability values for the voltage applied to the input of the modulator $v = V_0$ are $P^I_{V_0} = 1$ and $P^{II}_{V_0} = 0$, respectively, for the voltage applied to the input of the modulator $v = V_2$, $P^I_{V_2} = 0$ and $P^{II}_{V_2} = 1$, respectively, and for the voltage applied to the input of the modulator $v = V_1$, $P^I_{V_1} = P^{II}_{V_1} = 50\%$, respectively. Due to the dark counts of the detectors, the finite extinction coefficient of the polarization separating element, or a potential interference of an unauthorized party, the measured probabilities will deviate from those of the idealized scenario. Based on the measured values $P^I_{V_0}, P^{II}_{V_0}, P^I_{V_1}, P^{II}_{V_1}, P^I_{V_2}, P^{II}_{V_2}$, using the probability theory and the physical model of the optical system, a set of the following parameters of the physical model of the generator system can be calculated:

- $\mu$ - average number of photons in a pulse of laser light measured using the detectors, the measurement of which allows the generation of a random bit;
- $\lambda$ - transmission coefficient, where $\lambda = cos^2(\gamma)$, where $\gamma$ is the angle of polarization rotation of the optical beam incident on the polarization separating element. During the testing procedure, it is assumed that this angle may deviate from the value resulting from the value of the voltage applied to the electrical input of the modulator due to an interference of an unauthorized party. In particular, it is assumed that for the voltage applied to the electrical input of the modulator $v = V_1$, $\gamma$ may be different than 45°, and for the voltage applied to the electrical input of the modulator $v = V_2$, $2\gamma$ may be different than 90°;
- probability $f$ with the voltage applied to the electrical input of the polarization modulator $v = V_0$ means the probability that, due to an interference of an unauthorized party, the detector 131 placed in the optical path I, in spite of having observed a photon, did not send an electric pulse to the generating module, whereas with the voltage applied to the electrical input of the polarization modulator $v = V_2$, the probability $f$ means the probability that, due to the interference of an unauthorized party, the detector 132 placed in the optical path II, in spite of having observed a photon, did not send an electric pulse to the generating module 140.

Based on the determined values of the above parameters of the physical model ($\mu_0$, $\lambda_0$, $f_0$), the maximum probability of guessing a random bit by an unauthorized party $P_g$ is determined. If the maximum probability $P_g$ satisfies the inequality $P_g < X$, where $X$ is the maximum acceptable probability value of guessing a random bit by an unauthorized party, ranging from 50% to 100%, the device is capable of generating random private bits. Preferably, the maximum probability of guessing a random bit by an unauthorized party $P_g$ should be less than 75%. The condition $P_g < 75\%$ is met when the point ($\mu_0$, $\lambda_0$, $f_0$) in three-dimensional space ($\mu$, $\lambda$, $f$) defined by the determined values of the parameters of the physical model is inside the tetrahedron shown in Fig. 4, whose vertices are in the points:

- ($\mu$=0, $\lambda$=0, $f$=0);
- ($\mu$=0, $\lambda$=0,75, $f$=0);
- ($\mu$=10, $\lambda$=0, $f$=0);
- ($\mu$=0, $\lambda$=0, $f$=1);

For the unauthorized party's strategy consisting in guessing random bits without any additional information, the maximum probability $P_g$ is 50%.

**[Possible areas of application of the invention]**

The present invention can be used i.a. in the following areas of technology: IT and ICT cybersecurity, data encryption and cryptography. Random number generators are widely used among users of computer and telephone networks. In addition, their use is particularly important in encryption of sensitive data in the banking and financial sector, power industry, industrial control and automation, in securing sensitive medical data, in the military sector, in communication in government administration and in secret services and diplomatic corps (where sending and receiving messages from remote facilities is exposed to eavesdropping by unauthorized persons).

In addition, the invention can be used in games of chance, especially in number games, the rules of which are based on the true randomness of events, preventing third parties from predicting the draw result. Random number generators are also used in numerical simulations that require a true random sampling, e.g. the Monte Carlo method.

**Claims**

1. A device for quantum generation of random numbers comprising a light source (100) with fixed polarization and a polarization splitting element (110) optically connected thereto, having a first output (111) corresponding to vertical polarization and a second output (112) corresponding to horizontal polarization, and a first detector (131) optically connected to the first output (111) of the polarization splitting element (110) and a second detector (132) optically connected to the second output (112) of the polarization splitting element (110), a generating module (140) having a first input (141) connected to the output of the first detector (131) and a second input (142) connected to the output of the second detector (132), and a two-state output (143), the generating module (140) configured to generate on the two-state output (143) random bits having a value of 1 upon receiving a signal on the first input (141) and bits having a value of 0 upon receiving a signal on the second input (142), **characterized in that** the light source (100) is connected to the polarization splitting element (110) via a multi-state polarization modulator (150) controlled by a digital or analog signal generated by a control electronics (160) connected to the multi-state polarization modulator (150).

2. The device according to claim 1, **characterized in that** the multi-state polarization modulator (150) comprises two two-state polarization modulators (251) and (252) optically connected to each other, wherein both modulators are configured to rotate the polarization by 45° when a control digital signal with the bit value *1* is applied to their electrical input and to rotate the polarization by 0° when a control digital signal with the bit value 0 is applied to their electrical input, or alternatively to rotate the polarization by 45° when a control digital signal with the bit value *0* is applied to their electrical input and to rotate the polarization by 0° when a control digital signal with the bit value *1* is applied to their electrical input.

3. The device according to claim 1, **characterized in that** the multi-state polarization modulator (150) comprises two two-state polarization modulators (351) and (352) optically connected to each other, wherein one of the modulators (351, 352) is configured to rotate the polarization by 45° when a digital signal with the bit value 1 is applied to its electrical input and to rotate the polarization by 0° when a digital signal with the bit value 0 is applied to its electrical input, and the second of the modulators (351, 352), respectively, is configured to rotate the polarization by 90° when a digital signal with the bit value *1* is applied to its electrical input, and to rotate the polarization by 0° when a digital signal with a bit value *0* is applied to its electrical input.

4. The device according to claim 1, **characterized in that** the multi-state polarization modulator (150) comprises two two-state polarization modulators (351) and (352) optically connected to each other, wherein one of the modulators (351, 352) is configured to rotate the polarization by 45° when a digital signal with the bit value 0 is applied to its electrical input and to rotate the polarization by 0° when a digital signal with a the bit value *1* is applied to its electrical input, and the second of the modulators, (351, 352), respectively, is configured to rotate the polarization by 90° when a digital signal with the bit value 0 is applied to its electrical input and to rotate the polarization by 0° when a digital signal with the bit value *1* is applied to its electrical input.

5. The device according to any one of claims from 1 to 4, **characterized in that** the polarization separating element (110) is a polarization beam splitting cube with dielectric coating, or a birefringence-based polarizer, or a prism.

6. The device according to any one of claims from 1 to 5, **characterized in that** the light source (100) is a coherent light source, preferably comprising a laser diode or a pulsed laser, or an incoherent light source, preferably comprising an LED diode, or a single photon source, preferably based on single atoms or quantum dots.

7. The device according to any one of claims from 1 to 6, **characterized in that** the light source (100) is configured to emit vertically or horizontally polarized light pulses or
the light source (100) is configured to generate an optical beam with a central wavelength in the range of 400-1600 nm, the average energy of which is less than 1 $\mu$W.

8. The device according to any one of claims from 1 to 7, **characterized in that** the single photon detectors (131) and (132) both comprise an avalanche photodiode or a superconductivity-based single photon detector, or alternatively one of the detectors (131, 132) comprises an avalanche photodiode and the other detector comprises a superconductivity-based single photon detector.

9. The device according to any one of claims 1-8, **characterized in that** the optical path is an optical fiber, a waveguide or an optical beam in free space.

**10.** A method for verification of privacy of random bit sequences generated by means of the device according to any claim 1 to 9 by verifying that the device is capable of generating random private bits, in which, while generating random numbers, the polarization of the beam incident on the polarization separating element is diagonal, i.e. rotated by 45° with respect to the direction of polarization transmitted by the polarization separating element, **characterized in that** during the verification of privacy, using the control electronics (160) one controls the multi-state polarization modulator (150) and rotates the polarization of the light incident on the polarization separating element (110), setting it sequentially at 0°, 45°, and 90° to the direction of polarization transmitted by the polarization separating element, and for each of the three polarization directions (0°, 45°, 90°), the sequences of bits generated by the generating module (140) are recorded, and then, based on each of the three sequences, the probability $P^I$ of recording a count by the first detector (131) and the probability $P^{II}$ of recording a count by the second detector (132) are determined, and based on the six probabilities, i.e. $P^I_{00}, P^{II}_{00}, P^I_{11}, P^{II}_{11}, P^I_{01}, P^{II}_{01}$ or $P^I_{00}, P^{II}_{00}, P^I_{11}, P^{II}_{11}, P^I_{10}, P^{II}_{10}$ or $P^I_{00}, P^{II}_{00}, P^I_{01}, P^{II}_{01}, P^I_{10}, P^{II}_{10}$ or $P^I_{00}, P^{II}_{00}, P^I_{01}, P^{II}_{01}, P^I_{11}, P^{II}_{11}$ or $P^I_{V_0}, P^{II}_{V_0}, P^I_{V_1}, P^{II}_{V_1}, P^I_{V_2}, P^{II}_{V_2}$,

where

    • the Roman numeral *I* or *II* in the superscript means the first detector (131) or the second detector (132), respectively,
    • *xy* in the subscript, where *x=0* or *x=1* and *y=0* or *y=1,* mean the values of the control bits applied to the first polarization modulator (251, 351) of the multi-state polarization modulator (150), and to the second polarization modulator (252, 352) of the multi-state polarization modulator (150), respectively,
    • $V_0$, $V_1$, and $V_2$ in the subscript mean the voltages $V_0$, $V_1$, and $V_2$, respectively, as applied to the electrical input of the multi-state polarization modulator (150),

the parameters of the physical model of the system are calculated, which are used to determine the maximum probability of guessing a random bit by an unauthorized party $P_g$, and the privacy verification is considered positive when the maximum probability of guessing a random bit by an unauthorized party $P_g$ is lower than the maximum acceptable probability value of guessing a random bit by an unauthorized party unauthorized $X$.

**11.** The method according to claim 10, **characterized in that** a physical model is used to determine the maximum probability of guessing a random bit by an unauthorized party $P_g$, the parameters of which are:

    (a) the average number of photons in the measured pulses - $\mu$;
    (b) the transmission coefficient - $\lambda$;
    (c) the probability $f$.

**12.** The method according to claim 10 or 11, **characterized in that** the verification of privacy of the generated sequence of random bits is considered positive depending on whether the determined parameter values of the physical model ($\mu_0$, $\lambda_0$, $f_0$) belong to a predefined set of numerical values in the three-dimensional space ($\mu$, $\lambda$, $f$) calculated on the basis of a physical model and on the basis of the maximum acceptable value of the probability of guessing a random bit by an unauthorized party $X$.

**13.** The method according to claim 12, **characterized in that** the maximum acceptable value of the probability of guessing a random bit by an unauthorized party $X$ is in the range from 50% to 100%.

**14.** The method according to claim 13, **characterized in that** the maximum acceptable value of the probability of guessing a random bit by an unauthorized party $X$ is 75%, for $X$ = 75% the verification of privacy of the generated sequence of random bits is positive (i.e. $P_g$ < 75%), when the determined parameter values of the physical model ($\mu_0$, $\lambda_0$, $f_0$) are inside tetrahedron whose vertices are in the following points in the three-dimensional space ($\mu$, $\lambda$, *f*):

    • ($\mu=0$, $\lambda=0$, *f=0*);
    • ($\mu=0$, $\lambda=0,75$, *f=0*);
    • ($\mu=10$, $\lambda=0$, *f=0*);
    • ($\mu=0$, $\lambda=0$, *f=1*);

**15.** A computer program, **characterized in that** it contains instructions which, when loaded into the control electronics (160) and the generating module (140) of the device according to any of claims 1 to 9, implement the method of any of claim 10 to 14.

**Patentansprüche**

1. Vorrichtung für die Quanten-Zufallszahlengenerierung, umfassend eine Lichtquelle (100) mit fester Polarisation und ein damit optisch verbundenes polarisationsteilendes Element (110) mit einem ersten Ausgang (111), der einer vertikalen Polarisation entspricht, und einem zweiten Ausgang (112), der einer horizontalen Polarisation entspricht, sowie einen ersten Detektor (131), der mit dem ersten Ausgang (111) des polarisationsteilenden Elements (110) optisch verbunden ist, und einen zweiten Detektor (132), der mit dem zweiten Ausgang (112) des polarisationsteilenden Elements (110) optisch verbunden ist, ein Generierungsmodul (140), das einen ersten Eingang (141), der mit dem Ausgang des ersten Detektors (131) verbunden ist, und einen zweiten Eingang (142), der mit dem Ausgang des zweiten Detektors (132) verbunden ist, und einen Zweizustandsausgang (143) aufweist, wobei das Generierungsmodul (140) dazu eingerichtet ist, am Zweizustandsausgang (143) Zufallsbits mit einem Wert von 1 bei Empfang eines Signals am ersten Eingang (141) und Bits mit einem Wert von 0 bei Empfang eines Signals am zweiten Eingang (142) zu generieren, **dadurch gekennzeichnet, dass** die Lichtquelle (100) mit dem polarisationsteilenden Element (110) über einen Mehrzustandspolarisationsmodulator (150) verbunden ist, der von einem digitalen oder analogen Signal gesteuert wird, das von einer Steuerelektronik (160) generiert wird, die mit dem Mehrzustandspolarisationsmodulator (150) verbunden ist.

2. Vorrichtung nach Anspruch 1, **dadurch gekennzeichnet, dass** der Mehrzustandspolarisationsmodulator (150) zwei optisch miteinander verbundene Zweizustandspolarisationsmodulatoren (251) und (252) umfasst, wobei beide Modulatoren dazu eingerichtet sind, die Polarisation um 45° zu drehen, wenn ein digitales Steuersignal mit dem Bitwert *1* an ihren elektrischen Eingang angelegt wird, und die Polarisation um 0° zu drehen, wenn ein digitales Steuersignal mit dem Bitwert *0* an ihren elektrischen Eingang angelegt wird, oder alternativ die Polarisation um 45° zu drehen, wenn ein digitales Steuersignal mit dem Bitwert *0* an ihren elektrischen Eingang angelegt wird, und die Polarisation um 0° zu drehen, wenn ein digitales Steuersignal mit dem Bitwert *1* an ihren elektrischen Eingang angelegt wird.

3. Vorrichtung nach Anspruch 1, **dadurch gekennzeichnet, dass** der Mehrzustandspolarisationsmodulator (150) zwei optisch miteinander verbundene Zweizustandspolarisationsmodulatoren (351) und (352) umfasst, wobei einer der Modulatoren (351, 352) dazu eingerichtet ist, die Polarisation um 45° zu drehen, wenn ein digitales Signal mit dem Bitwert *1* an seinen elektrischen Eingang angelegt wird, und die Polarisation um 0° zu drehen, wenn ein digitales Signal mit dem Bitwert 0 an seinen elektrischen Eingang angelegt wird, und der zweite der Modulatoren (351, 352) entsprechend dazu eingerichtet ist, die Polarisation um 90° zu drehen, wenn ein digitales Signal mit dem Bitwert *1* an seinen elektrischen Eingang angelegt wird, und die Polarisation um 0° zu drehen, wenn ein digitales Signal mit einem Bitwert 0 an seinen elektrischen Eingang angelegt wird.

4. Vorrichtung nach Anspruch 1, **dadurch gekennzeichnet, dass** der Mehrzustandspolarisationsmodulator (150) zwei optisch miteinander verbundene Zweizustandspolarisationsmodulatoren (351) und (352) umfasst, wobei einer der Modulatoren (351, 352) dazu eingerichtet ist, die Polarisation um 45° zu drehen, wenn ein digitales Signal mit dem Bitwert *0* an seinen elektrischen Eingang angelegt wird, und die Polarisation um 0° zu drehen, wenn ein digitales Signal mit dem Bitwert *1* an seinen elektrischen Eingang angelegt wird, und der zweite der Modulatoren (351, 352) entsprechend dazu eingerichtet ist, die Polarisation um 90° zu drehen, wenn ein digitales Signal mit dem Bitwert *0* an seinen elektrischen Eingang angelegt wird, und die Polarisation um 0° zu drehen, wenn ein digitales Signal mit dem Bitwert *1* an seinen elektrischen Eingang angelegt wird.

5. Vorrichtung nach einem der Ansprüche 1 bis 4, **dadurch gekennzeichnet, dass** das polarisationsteilende Element (110) ein Polarisations-Strahlteilerwürfel mit dielektrischer Beschichtung oder ein Birefringenz-basierter Polarisator oder ein Prisma ist.

6. Vorrichtung nach einem der Ansprüche 1 bis 5, **dadurch gekennzeichnet, dass** die Lichtquelle (100) eine kohärente Lichtquelle, die vorzugsweise eine Laserdiode oder einen Pulslaser umfasst, oder eine inkohärente Lichtquelle ist, die vorzugsweise eine LED-Diode oder eine Einzelphotonenquelle, vorzugsweise basierend auf einzelnen Atomen oder Quantenpunkten, umfasst.

7. Vorrichtung nach einem der Ansprüche 1 bis 6, **dadurch gekennzeichnet, dass** die Lichtquelle (100) dazu eingerichtet ist, vertikal oder horizontal polarisierte Lichtimpulse zu emittieren, oder
die Lichtquelle (100) dazu eingerichtet ist, einen optischen Strahl mit einer Zentralwellenlänge im Bereich von 400-1600 nm zu erzeugen, dessen mittlere Energie weniger als 1 $\mu$W beträgt.

8. Vorrichtung nach einem der Ansprüche 1 bis 7, **dadurch gekennzeichnet, dass** die Einzelphotonendetektoren (131) und (132) beide eine Avalanche-Photodiode oder einen auf Supraleitfähigkeit basierenden Einzelphotonendetektor umfassen oder alternativ einer der Detektoren (131, 132) eine Avalanche-Photodiode umfasst und der andere Detektor einen auf Supraleitfähigkeit basierenden Einzelphotonendetektor umfasst.

9. Vorrichtung nach einem der Ansprüche 1 bis 8, **dadurch gekennzeichnet, dass** der optische Pfad ein Lichtwellenleiter, ein Wellenleiter oder ein optischer Strahl im freien Raum ist.

10. Verfahren zur Überprüfung der Vertraulichkeit von Zufallsbitfolgen, die mithilfe der Vorrichtung nach einem der Ansprüche 1 bis 9 generiert werden, indem geprüft wird, dass die Vorrichtung imstande ist, zufällige vertrauliche Bits zu generieren, wobei während des Generierens von Zufallszahlen die Polarisation des auf das polarisationsteilende Element einfallenden Strahls diagonal, d.h. um 45° gegenüber der Richtung der vom polarisationsteilenden Element transmittierten Polarisation gedreht ist, **dadurch gekennzeichnet, dass** während der Überprüfung der Vertraulichkeit unter Verwendung der Steuerelektronik (160) der Mehrzustandspolarisationsmodulator (150) gesteuert und die Polarisation des auf das polarisationsteilende Element (110) einfallenden Lichts gedreht wird, indem sie der Reihe nach auf 0°, 45° und 90° zur Richtung der vom polarisationsteilenden Element transmittierten Polarisation eingestellt wird, und für jede der drei Polarisationsrichtungen (0°, 45°, 90°) die vom Generierungsmodul (140) generierten Bitfolgen aufgezeichnet werden und dann basierend auf jeder der drei Folgen die Wahrscheinlichkeit $P^I$ des Aufzeichnens eines Zählwerts durch den ersten Detektor (131) und die Wahrscheinlichkeit $P^{II}$ des Aufzeichnens eines Zählwerts durch den zweiten Detektor (132) ermittelt werden, und auf der Grundlage der sechs Wahrscheinlichkeiten, d.h.

$$P^I_{00}, P^{II}_{00}, P^I_{11}, P^{II}_{11}, P^I_{01}, P^{II}_{01} \quad \text{oder} \quad P^I_{00}, P^{II}_{00}, P^I_{11}, P^{II}_{11}, P^I_{10}, P^{II}_{10} \quad \text{oder}$$

$$P^I_{00}, P^{II}_{00}, P^I_{01}, P^{II}_{01}, P^I_{10}, P^{II}_{10} \quad \text{oder} \quad P^I_{00}, P^{II}_{00}, P^I_{01}, P^{II}_{01}, P^I_{11}, P^{II}_{11} \quad \text{oder} \quad P^I_{V_0}, P^{II}_{V_0}, P^I_{V_1}, P^{II}_{V_1}, P^I_{V_2}, P^{II}_{V_2},$$

wobei

• die hochgestellte römische Ziffer *I* oder *II* den ersten Detektor (131) bzw. den zweiten Detektor (132) bezeichnet,
• die Indizes *xy*, wobei *x=0* oder *x=1* und *y=0* oder *y=1,* die Werte der Steuerbits bezeichnen, die auf den ersten Polarisationsmodulator (251, 351) des Mehrzustandspolarisationsmodulators (150) bzw. auf den zweiten Polarisationsmodulator (252, 352) des Mehrzustandspolarisationsmodulators (150) angewendet werden,
• die Indizes $V_0$, $V_1$ und $V_2$ die Spannungen $V_0$, $V_1$ bzw. $V_2$ bezeichnen, die an den elektrischen Eingang des Mehrzustandspolarisationsmodulators (150) angelegt werden,

die Parameter des physikalischen Modells des Systems berechnet werden, die zum Ermitteln der maximalen Wahrscheinlichkeit verwendet werden, mit der eine unbefugte Partei $P_g$ ein Zufallsbit errät, und die Überprüfung der Vertraulichkeit wird als positiv angesehen, wenn die maximale Wahrscheinlichkeit des Erratens eines Zufallsbits durch eine unbefugte Partei $P_g$ niedriger ist als der maximal zulässige Wahrscheinlichkeitswert des Erratens eines Zufallsbits durch eine unbefugte Partei X.

11. Verfahren nach Anspruch 10, **dadurch gekennzeichnet, dass** ein physikalisches Modell zum Ermitteln der maximalen Wahrscheinlichkeit des Erratens eines Zufallsbits durch eine unbefugte Partei $P_g$ verwendet wird, dessen Parameter sind:

(a) die mittlere Photonenzahl in den gemessenen Pulsen -$\mu$;
(b) der Transmissionskoeffizient - *A;*
(c) die Wahrscheinlichkeit *f.*

12. Verfahren nach Anspruch 10 oder 11, **dadurch gekennzeichnet, dass** die Überprüfung der Vertraulichkeit der generierten Folge von Zufallsbits in Abhängigkeit davon als positiv angesehen wird, ob die ermittelten Parameterwerte des physikalischen Modells ($\mu_0$, $\lambda_0$, $f_0$) zu einer vordefinierten Menge von Zahlenwerten im dreidimensionalen Raum ($\mu$, $\lambda$, *f*) gehören, die auf der Grundlage eines physikalischen Modells und auf der Grundlage des maximal zulässigen Werts der Wahrscheinlichkeit des Erratens eines Zufallsbits durch eine unbefugte Partei X berechnet werden.

13. Verfahren nach Anspruch 12, **dadurch gekennzeichnet, dass** der maximal zulässige Wert der Wahrscheinlichkeit des Erratens eines Zufallsbits durch eine unbefugte Partei X im Bereich von 50% bis 100% liegt.

14. Verfahren nach Anspruch 13, **dadurch gekennzeichnet, dass** der maximal zulässige Wert der Wahrscheinlichkeit des Erratens eines Zufallsbits durch eine unbefugte Partei $X$ 75% beträgt, wobei für $X$ = 75% die Überprüfung der Vertraulichkeit der generierten Folge von Zufallsbits positiv ist (d.h. $P_g$ < 75%), wenn die ermittelten Parameterwerte des physikalischen Modells ($\mu_0$, $\lambda_0$, $f_0$) innerhalb eines Tetraeders liegen, dessen Eckpunkte sich an den folgenden Punkten im dreidimensionalen Raum ($\mu$, $\lambda$, $f$) befinden:

- ($\mu$=0, $\lambda$=0, $f$=0);
- ($\mu$=0, $\lambda$=0, 75, $f$=0);
- ($\mu$=10, $\lambda$=0, $f$=0);
- ($\mu$=0, $\lambda$=0, $f$=1);

15. Computerprogramm, **dadurch gekennzeichnet, dass** es Anweisungen enthält, die, wenn sie in die Steuerelektronik (160) und das Generierungsmodul (140) der Vorrichtung nach einem der Ansprüche 1 bis 9 geladen werden, das Verfahren nach einem der Ansprüche 10 bis 14 implementieren.

**Revendications**

1. Dispositif pour la génération quantique de nombres aléatoires comprenant une source lumineuse (100) à polarisation fixe et un élément de séparation de polarisation (110) relié optiquement à celle-ci, comportant une première sortie (111) correspondant à une polarisation verticale et une deuxième sortie (112) correspondant à une polarisation horizontale, ainsi qu'un premier détecteur (131) relié optiquement à la première sortie (111) de l'élément de séparation de polarisation (110) et un deuxième détecteur (132) relié optiquement à la deuxième sortie (112) de l'élément de séparation de polarisation (110), un module de génération (140) comportant une première entrée (141) reliée à la sortie du premier détecteur (131) et une deuxième entrée (142) reliée à la sortie du deuxième détecteur (132), et une sortie à deux états (143), le module de génération (140) étant configuré pour générer sur la sortie à deux états (143) des bits aléatoires ayant une valeur de 1 lors de la réception d'un signal sur la première entrée (141) et des bits ayant une valeur de 0 lors de la réception d'un signal sur la deuxième entrée (142), **caractérisé en ce que** la source lumineuse (100) est connectée à l'élément de séparation de polarisation (110) via un modulateur de polarisation à plusieurs états (150) commandé par un signal numérique ou analogique généré par une électronique de commande (160) connectée au modulateur de polarisation à plusieurs états (150).

2. Dispositif selon la revendication 1, **caractérisé en ce que** le modulateur de polarisation à plusieurs états (150) comprend deux modulateurs de polarisation à deux états (251) et (252) reliés optiquement l'un à l'autre, où les deux modulateurs sont configurés pour faire tourner la polarisation de 45° lorsqu'un signal numérique de commande ayant la valeur binaire 1 est appliqué à leur entrée électrique et pour faire tourner la polarisation de 0° lorsqu'un signal numérique de commande ayant la valeur binaire 0 est appliqué à leur entrée électrique, ou alternativement pour faire tourner la polarisation de 45° lorsqu'un signal numérique de commande ayant la valeur binaire 0 est appliqué à leur entrée électrique et pour faire tourner la polarisation de 0° lorsqu'un signal numérique de commande ayant la valeur binaire 1 est appliqué à leur entrée électrique.

3. Dispositif selon la revendication 1, **caractérisé en ce que** le modulateur de polarisation à plusieurs états (150) comprend deux modulateurs de polarisation à deux états (351) et (352) reliés optiquement l'un à l'autre, dans lequel l'un des modulateurs (351, 352) est configuré pour faire tourner la polarisation de 45° lorsqu'un signal numérique ayant la valeur binaire *1* est appliqué à son entrée électrique et pour faire tourner la polarisation de 0° lorsqu'un signal numérique ayant la valeur binaire *0* est appliqué à son entrée électrique, et le second des modulateurs (351, 352), respectivement, est configuré pour faire tourner la polarisation de 90° lorsqu'un signal numérique ayant la valeur binaire *1* est appliqué à son entrée électrique, et pour faire tourner la polarisation de 0° lorsqu'un signal numérique ayant la valeur binaire 0 est appliqué à son entrée électrique.

4. Dispositif selon la revendication 1, **caractérisé en ce que** le modulateur de polarisation à plusieurs états (150) comprend deux modulateurs de polarisation à deux états (351) et (352) reliés optiquement l'un à l'autre, dans lequel l'un des modulateurs (351, 352) est configuré pour faire tourner la polarisation de 45° lorsqu'un signal numérique ayant la valeur binaire 0 est appliqué à son entrée électrique et pour faire tourner la polarisation de 0° lorsqu'un signal numérique ayant la valeur binaire *1* est appliqué à son entrée électrique, et le second des modulateurs, (351, 352), respectivement, est configuré pour faire tourner la polarisation de 90° lorsqu'un signal numérique ayant la valeur binaire 0 est appliqué à son entrée électrique et pour faire tourner la polarisation de 0° lorsqu'un signal numérique ayant la valeur binaire *1* est appliqué à son entrée électrique.

**5.** Dispositif selon l'une quelconque des revendications 1 à 4, **caractérisé en ce que** l'élément de séparation de polarisation (110) est un cube de séparation de faisceaux de polarisation avec revêtement diélectrique, ou un polariseur à biréfringence, ou un prisme.

**6.** Dispositif selon l'une quelconque des revendications 1 à 5, **caractérisé en ce que** la source de lumière (100) est une source de lumière cohérente, comprenant de préférence une diode laser ou un laser pulsé, ou une source de lumière incohérente, comprenant de préférence une diode LED, ou une source à photon unique, de préférence à base d'atomes ou de points quantiques.

**7.** Dispositif selon l'une quelconque des revendications 1 à 6, **caractérisé en ce que** la source lumineuse (100) est configurée pour émettre des impulsions lumineuses polarisées verticalement ou horizontalement, ou
la source lumineuse (100) est configurée pour générer un faisceau optique dont la longueur d'onde centrale est comprise entre 400 et 1600 nm et dont l'énergie moyenne est inférieure à 1 $\mu$W.

**8.** Dispositif selon l'une quelconque des revendications 1 à 7, **caractérisé en ce que** les détecteurs de photons uniques (131) et (132) comprennent tous deux une photodiode à avalanche ou un détecteur de photons uniques à base de supraconductivité, ou bien l'un des détecteurs (131, 132) comprend une photodiode à avalanche et l'autre détecteur comprend un détecteur de photons uniques à base de supraconductivité.

**9.** Dispositif selon l'une quelconque des revendications 1 à 8, **caractérisé en ce que** le chemin optique est une fibre optique, un guide d'ondes ou un faisceau optique en espace libre.

**10.** Procédé de vérification de la confidentialité de séquences de bits aléatoires générées au moyen du dispositif selon l'une quelconque des revendications 1 à 9, consistant à vérifier que le dispositif est capable de générer des bits aléatoires confidentiels, dans lequel, lors de la génération de nombres aléatoires, la polarisation du faisceau incident sur l'élément de séparation de polarisation est diagonale, c'est-à-dire tournée de 45° par rapport à la direction de polarisation transmise par l'élément de séparation de polarisation, **caractérisé en ce que,** pendant la vérification de la confidentialité, à l'aide de l'électronique de commande (160), on commande le modulateur de polarisation à plusieurs états (150) et on fait tourner la polarisation de la lumière incidente sur l'élément de séparation de polarisation (110), en la réglant séquentiellement à 0°, 45° et 90° par rapport à la direction de polarisation transmise par l'élément de séparation de polarisation, et pour chacune des trois directions de polarisation (0°, 45°, 90°), on enregistre les séquences de bits générées par le module de génération (140), puis, sur la base de chacune des trois séquences, on détermine la probabilité $P^I$ d'enregistrer un compte par le premier détecteur (131) et la probabilité $P^{II}$ d'enregistrer un compte par le deuxième détecteur (132), et sur la base des six probabilités, à savoir $P^I_{00}, P^{II}_{00}, P^I_{11}, P^{II}_{11}, P^I_{01}, P^{II}_{01}$

ou $P^I_{00}, P^{II}_{00}, P^I_{11}, P^{II}_{11}, P^I_{10}, P^{II}_{10}$ ou $P^I_{00}, P^{II}_{00}, P^I_{01}, P^{II}_{01}, P^I_{10}, P^{II}_{10}$ ou $P^I_{00}, P^{II}_{00}, P^I_{01}, P^{II}_{01}, P^I_{11}, P^{II}_{11}$ ou

$$P^I_{V_0}, P^{II}_{V_0}, P^I_{V_1}, P^{II}_{V_1}, P^I_{V_2}, P^{II}_{V_2} \qquad , \qquad \text{où}$$

• le chiffre romain *I* ou *II* en exposant désigne respectivement le premier détecteur (131) ou le deuxième détecteur (132),
• *xy* en indice, où *x = 0* ou *x = 1* et *y = 0* ou *y = 1*, désignent respectivement les valeurs des bits de commande appliqués au premier modulateur de polarisation (251, 351) du modulateur de polarisation à états multiples (150), et au deuxième modulateur de polarisation (252, 352) du modulateur de polarisation à états multiples (150), respectivement,
• $V_0, V_1$ et $V_2$ dans l'indice désignent respectivement les tensions $V_0$, $V_1$ et $V_2$, telles qu'appliquées à l'entrée électrique du modulateur de polarisation à états multiples (150),

les paramètres du modèle physique du système sont calculés, lesquels sont utilisés pour déterminer la probabilité maximale de deviner un bit aléatoire par une partie non autorisée $P_g$, et la vérification de la confidentialité est considérée comme positive lorsque la probabilité maximale de deviner un bit aléatoire par une partie non autorisée $P_g$ est inférieure à la valeur maximale acceptable de la probabilité de deviner un bit aléatoire par une partie non autorisée $X$.

**11.** Procédé selon la revendication 10, **caractérisé en ce qu'**un modèle physique est utilisé pour déterminer la probabilité maximale qu'une partie non autorisée devine un bit aléatoire $P_g$, dont les paramètres sont :

(a) le nombre moyen de photons dans les impulsions mesurées - $\mu$ ;
(b) le coefficient de transmission - $\lambda$ ;
(c) la probabilité $f$.

**12.** Procédé selon la revendication 10 ou 11, **caractérisé en ce que** la vérification de la confidentialité de la séquence de bits aléatoires générée est considérée comme positive selon que les valeurs des paramètres déterminées du modèle physique ($\mu_0$, $\lambda_0$, $f_0$) appartiennent à un ensemble prédéfini de valeurs numériques dans l'espace tridimensionnel ($\mu$, $\lambda$, $f$) calculé sur la base d'un modèle physique et sur la base de la valeur maximale acceptable de la probabilité qu'une partie non autorisée devine un bit aléatoire $X$.

**13.** Procédé selon la revendication 12, **caractérisé en ce que** la valeur maximale acceptable de la probabilité qu'une partie non autorisée devine un bit aléatoire $X$ se situe dans la plage de 50 % à 100 %.

**14.** Procédé selon la revendication 13, **caractérisé en ce que** la valeur maximale acceptable de la probabilité qu'une partie non autorisée devine un bit aléatoire $X$ est de 75 %, pour l' $X$ = 75 % , la vérification de la confidentialité de la séquence de bits aléatoires générée est positive (c'est-à-dire $P_g$ < 75% ), lorsque les valeurs déterminées des paramètres du modèle physique ($\mu_0$, $\lambda_0$, $f_0$) se trouvent à l'intérieur d'un tétraèdre dont les sommets sont situés aux points suivants dans l'espace tridimensionnel ($\mu$, $\lambda$, $f$) :

- ($\mu$=0, $\lambda$=0, $f$=0) ;
- ($\mu$=0, $\lambda$=0,75, $f$=0) ;
- ($\mu$=10, $\lambda$=0, $f$=0) ;
- ($\mu$=0, $\lambda$=0, $f$=1) ;

**15.** Programme d'ordinateur, **caractérisé en ce qu'**il contient des instructions qui, lorsqu'elles sont chargées dans l'électronique de commande (160) et le module de génération (140) du dispositif selon l'une quelconque des revendications 1 à 9, mettent en œuvre le procédé selon l'une quelconque des revendications 10 à 14.

Fig. 1

Fig. 2

Fig. 3

Fig. 4

**EP 4 493 996 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20190393675 A1
- WO 2018065593 A1
- WO 2021215941 A1

### Non-patent literature cited in the description

- **K. PARK ; S. PARK ; B. G. CHOI ; T. KANG ; J. KIM ; Y.-H. KIM ; H.-Z. JIN**. A lightweight true random number generator using beta radiation for IoT applications. *ETRI Journal.*, 2020, vol. 42 (6), 951-964
- **X. MA ; X. YUAN ; Z. CAO ; B. QI ; Z. ZHANG**. Quantum random number generation. *npj Quantum Information*, 2016, vol. 2, 16021
- **A. KULIKOV ; M. JERGER ; A. POTOČKI ; A. WALLRAFF ; A. FEDOROV**. Realization of Quantum Random Generator Certified with the Kochen-Specker Theorem. *Phys. Rev. Lett.*, 2017, vol. 119, 240501
- **D. DRAHI et al.** Certified Quantum Random Numbers from Untrusted Light. *Phys. Rev. X*, 2020, vol. 10, 041048
- **ERIC A. DAULE et al.** Review of superconducting nanowire single-photon detector system design options and demonstrated performance. *Optical Engineering*, 2014, vol. 53 (8), 081907